# EUROPÄISCHE PATENTANMELDUNG

(11) **EP 4 024 118 A1**
(43) Veröffentlichungstag der Anmeldung: **06.07.2022**
(21) Anmeldenummer: 21214727.6
(22) Anmeldetag: 15.12.2021
(51) Int. Cl.: G02B 26/10, B23K 26/08, G02B 17/08

(54) **ANORDNUNG ZUR AUSRICHTUNG, ROTATION UND/ODER FORMUNG EINES LASERSTRAHLS**

(30) Priorität: 05.01.2021 DE 102021200021
(71) Anmelder: Fraunhofer-Gesellschaft zur Förderung der angewandten Forschung e.V., 80686 München (DE)
(72) Erfinder: Franke, Volker, 01277 Dresden (DE); Panzner, Michael, 01277 Dresden (DE); Kretzschmar, Frank, 01277 Dresden (DE)
(74) Vertreter: Pfenning, Meinig & Partner mbB

(57) **Zusammenfassung**

Bei der Anordnung wird ein Laserstrahl zweidimensional einer Kreisbahnbewegung folgend oder spiralförmig ausgelenkt und direkt auf eine innere rotationssymmetrische Oberfläche eines hohlzylinderförmigen Körpers oder auf eine reflektierende und/oder brechende rotationssymmetrische Oberfläche mindestens eines ersten optischen Elements gerichtet. Von dieser Oberfläche wird der Laserstrahl auf eine Oberfläche oder Beschichtung des hohlzylinderförmigen Körpers gerichtet und von dort auf eine Oberfläche eines zweiten optischen Elements oder auf eine zweite den Laserstrahl brechende rotationssymmetrische Oberfläche des ersten optischen Elements zu seiner Rotation, Ausrichtung und/oder Formung in Richtung eines Werkstücks gerichtet ist. Die reflektierenden oder brechenden Oberflächen eines ersten und zweiten optischen Elements oder des ersten optischen Elements sind in einem schräg geneigten Winkel in Bezug auf die optische Achse A des Laserstrahls ausgerichtet. Das erste optische Element ist aus einem optisch transparenten Material gebildet und weist eine doppelkeilförmige Gestalt auf. Zwischen kegel- oder kegelstumpfförmigen die Laserstrahlung brechenden Oberflächen ist eine rotationssymmetrische Mantelfläche vorhanden, an der oder an einer dort ausgebildeten reflektierenden Beschichtung der mindestens eine Laserstrahl reflektiert wird.

## Beschreibung

Die Erfindung betrifft eine Anordnung zur Ausrichtung, Rotation und/oder Formung eines Laserstrahls.

Bei der Laserbearbeitung mit einem direkt schreibenden Verfahren wird der Laserstrahl überwiegend mit Scannern über das Werkstück geführt. Für verschiedene Bearbeitungsvarianten ist es von Vorteil asymmetrische Strahlprofile einzusetzen, um eine optimale Verteilung der Laserstrahlenergie für verbesserte Bearbeitungsergebnisse bzw. höhere Prozessgeschwindigkeiten zu erreichen. Wenn mit einem asymmetrischen Strahlprofil, z.B. einem linienförmigen Strahlquerschnitt, gearbeitet wird, besteht dann die Forderung, den Laserstrahl während seiner Bewegung so zu drehen, dass das nichtrotationssymmetrische Strahlprofil auf dem Werkstück stets in Vorschubbewegungsrichtung des Brennflecks ausgerichtet ist. Bei der Laserbearbeitung bewegen sich die Brennflecke der Laserstrahlen mitunter mit Geschwindigkeiten von mehreren Metern pro Sekunde. Die Strahlquerschnittsausrichtung muss in diesen Fällen häufig mit extrem hoher Drehbeschleunigung und Drehgeschwindigkeit erfolgen.

Bei der Laserbearbeitung mit ultrakurzen Laserpulsen (ps, fs) wird insbesondere hinsichtlich thermischer Schädigungen ein qualitativ wesentlich besseres Bearbeitungsergebnis als bei Nutzung von ns-Pulsen oder noch längeren einzelnen Pulsen erzielt. Bei konventioneller Fokussierung ist die in ein Werkstück übertragbare Laserenergie bzw. -leistung beschränkt, da es auch bei ultrakurzen Pulsen bei zu hohen Repetitionsraten oder auch zu hohen Pulsleistungsdichten zu einer Wärmeakkumulation kommen kann, die thermische Schädigungen hervorrufen kann. Dies kann umgangen werden, wenn ein linienförmiger Brennfleck auf einer zu bearbeitenden Werkstückoberfläche eingesetzt wird. Mit wachsender Länge dieser Brennfleckgeometrie in eine Achsrichtung kann bei gleichbleibender Pulsleistungsdichte die übertragbare Leistung aufskaliert werden. Für die Realisierung der freien Strahlbewegung mit einem Scanner muss die Brennfleckausrichtung sehr schnell an der gewollten Bahnkurve, entlang der der Brennfleck ausgelenkt bzw. bewegt werden soll, ausgerichtet werden. Für diese Problematik ist also eine extrem schnelle Strahlausrichtung erforderlich.

Gegenwärtige Aufbauten zu solchen Applikationen sind aufgrund herkömmlicher rotierender die Ausrichtung des Brennflecks beeinflussender Elemente (z.B. Rotationsachsen) in den Strahlausrichtungsgeschwindigkeiten sowie den damit einhergehenden Winkelbeschleunigungen und somit dann auch in den maximal möglichen Scannergeschwindigkeiten begrenzt.

Die Mitdrehung des Laserstrahles bei der Bewegung des Brennflecks wird gegenwärtig auch bei Bohrprozessen realisiert. Dabei wird der Laserstrahl auf einer Kreisbahn geführt und es soll an jedem Punkt der Kreisbahn das Strahlprofil des Laserstrahls die gleiche Richtung zur Außenseite des Kreises der Kreisbahn einhalten, um wirklich ein kreisrundes Loch zu bohren. Solche Vorrichtungen werden gegenwärtig durch mechanisches Drehen von Prismen z.B. ein sogenanntes Dove-Prisma in Trepanierköpfen oder gegebenenfalls auch mit DOE's (Diffraktive Optische Elementen) realisiert. Motorantriebe für solche Optikelemente erlauben nur begrenzte Winkelbeschleunigungen und - geschwindigkeiten, da erhebliche mechanische Massen bewegt werden müssen. Deshalb wurden diese Vorrichtungen bisher nur für konstante Drehgeschwindigkeiten und oder moderate Drehbeschleunigungen bei Bohranwendungen eingesetzt.

Das Verfahren der schnellen Strahlprofilausrichtung bei freier Bewegung des Laserstrahles ohne Beschränkung auf eine Kreisbewegung wird beispielsweise auch erforderlich, wenn man hohe Laserleistungen ohne wesentliche Verluste über eine sehr dünne Linie eines entsprechend geometrisch geformten Brennflecks übertragen möchte, aber in der zulässigen Leistungsdichte auf dem Werkstück begrenzt ist. Dann könnte eine linienförmig geformte Brennfleckquerschnittsfläche auf die Oberfläche einer Probe oder eines Werkstücks gerichtet werden, der aber entsprechend der Bewegungsrichtung des Laserstrahls auf dem Werkstück ausgerichtet werden muss. Diese Problematik ergibt sich insbesondere beim Einsatz der neuen Ultrakurzpulslaser hoher Leistung.

Es ist daher Aufgabe der Erfindung, Möglichkeiten anzugeben mit denen eine direkte Laserbearbeitung mit Laserstrahlung hoher Leistung an Werkstückoberflächen, bei sehr hohen Vorschubbewegungsgeschwindigkeiten des jeweiligen Brennflecks eines Laserstrahls in Verbindung mit großen Beschleunigungen erreicht werden können und insbesondere die Möglichkeit besteht, die Ausrichtung eines nichtrotationssymmetrisch geformten Brennflecks in Bezug zu seiner Vorschubbewegungsrichtung in sehr kurzer Zeit vornehmen zu können.

Erfindungsgemäß wird diese Aufgabe mit einer Anordnung, die die Merkmale des Anspruchs 1 aufweist, gelöst. Vorteilhafte Ausgestaltungen und Weiterbildungen können mit in abhängigen Ansprüchen bezeichneten Merkmalen realisiert werden.

Basis der Erfindung ist die Idee, die bei der Strahldrehung erforderliche mechanische Drehung oder Bewegung einer größeren Eigenmasse eines Elements und Antriebes, auf ein Minimum zu reduzieren. Das gelingt durch den Einsatz von leichten optischen Elementen mit einer Laserstrahlung reflektierenden Oberfläche, wie z.B. Planspiegeln als einen Laserstrahl reflektierende optische Elemente an Stelle von Prismen oder DOE's mit ihren sehr massereichen Drehelementen. Ähnlich wie bei einem Laserscanner können die optischen Elemente mit einer reflektierenden Oberfläche dann ebenso schnell durch galvanometerähnliche Antriebe winkelbeschleunigt und dabei gedreht werden. Die erforderlichen hohen Drehgeschwindigkeiten und Winkelbeschleunigungen, die bei einer schnellen freien Bewegung des Laserstrahles mit Vorschubgeschwindigkeiten im Bereich m/s über ein Werkstück auftreten, können so realisiert werden.

Bei der erfindungsgemäßen Anordnung ist mindestens ein Laserstrahl von einer Laserstrahlungsquelle mittels einer ersten optischen Anordnung zweidimensional einer Kreisbahnbewegung folgend oder spiralförmig ausgelenkt und bei einer ersten Alternative direkt auf eine rotationssymmetrische Oberfläche eines hohlzylinderförmigen Körpers gerichtet. Dabei ist die rotationsymmetrische Oberfläche für die Laserstrahlung reflektierend oder der hohlzylinderförmige Körper mit einer reflektierenden Beschichtung an seiner äußeren oder inneren Mantelfläche beschichtet. Der an der reflektierenden Oberfläche oder Beschichtung reflektierte Laserstrahl kann dann in Richtung einer zu bearbeitenden Oberfläche eines Werkstücks gerichtet sein, wobei zwischen der zu bearbeitenden Oberfläche und der reflektierenden Oberfläche bzw. Beschichtung des Körpers mindestens ein weiteres strahlformendes und/oder auslenkendes optisches Element angeordnet sein kann, auf bzw. durch das der reflektierte Laserstrahls gerichtet werden kann, bevor er auf die zu bearbeitende Oberfläche auftrifft.

Bei einer zweiten erfindungsgemäßen Alternative ist der ausgelenkte Laserstrahl auf mindestens eine den mindestens einen Laserstrahl reflektierende und/oder in einem Winkel ungleich 0° und ungleich 90° brechende rotationssymmetrische Oberfläche mindestens eines ersten optischen Elements gerichtet. Dabei ist die reflektierende und/oder brechende Oberfläche so ausgerichtet, dass der von dieser Oberfläche reflektierte und/oder gebrochene mindestens eine Laserstrahl auf eine für die Laserstrahlung reflektierende und rotationssymmetrische Oberfläche auftrifft.

Der mindestens eine Laserstrahl kann bei der zweiten erfindungsgemäßen Alternative von der reflektierenden und rotationssymmetrischen Oberfläche des Körpers auf eine weitere die Laserstrahlung reflektierende Oberfläche eines zweiten optischen Elements oder bei einer dritten erfindungsgemäßen Alternative auf eine zweite den mindestens einen Laserstrahl in einem Winkel größer 0° und kleiner 90° brechende Oberfläche des ersten optischen Elements zur Rotation, Ausrichtung und/oder Formung des mindestens eines Laserstrahls in Richtung einer zu bearbeitenden Oberfläche eines Werkstücks gerichtet werden, wobei die den mindestens einen Laserstrahl reflektierenden oder brechenden Oberflächen eines ersten und zweiten optischen Elements oder eines ersten optischen Elements in einem schräg geneigten Winkel in Bezug zur optischen Achse A des auf die erste optische Anordnung einfallenden mindestens einen Laserstrahls ausgerichtet sind.#

Bei einer Ausführung bei dem mindestens ein Laserstrahl sowohl reflektiert, wie auch gebrochen wird, werden dann zwei Teilstrahlen erhalten, die entsprechend vorteilhaft auf unterschiedlichen Kreis- oder Spiralbahnen bewegt werden, so dass entsprechende Vorschubbewegungen der Brennflecke der Teilstrahlen erreicht werden können.

Bei der Erfindung ist es insbesondere durch den Einsatz der ersten optischen Anordnung, beispielsweise eines zweidimensional auslenkenden Scanners, in Verbindung mit dem ersten und zweiten bzw. dem einen ersten optischen Element möglich, eine Auslenkung und eine entsprechende Vorschubbewegung von Brennflecken mit größeren Radien zu realisieren und dabei nicht die Energiedichte im Brennfleck durch eine zu stark vergrößerte Brennfleckfläche erheblich zu reduzieren, wie dies beim alleinigen Einsatz von Laserscannern bisher der Fall ist, wenn eine große Winkelauslenkung mit einem Scanner erfolgt ist und sich dadurch die Brennfleckfläche verformt und vergrößert. Es können damit größere Hebeleinflüsse ausgenutzt werden, ohne dass es zu einer erheblichen Reduzierung der Energiedichte im jeweiligen Brennfleck kommt.

Bei der zweiten Alternative mit zwei optischen Elementen, die im Strahlengang der Laserstrahlung in einem Abstand zueinander angeordnet sind, und bei der die Reflexion an der rotationssymmetrischen reflektierenden Fläche zwischen erstem und zweiten optischen Element erfolgt, können ein erstes und ein zweites optisches Element jeweils ein kegel- oder kegelstumpfförmiger Spiegel oder Körper sein. Allein oder zusätzlich dazu kann an einem ersten und/oder zweiten optischen Element eine äußere Mantelfläche zumindest bereichsweise konkav oder konvex gewölbt ausgebildet sein, wobei die Wölbung in Bezug zur optischen Achse A des einfallenden Laserstrahls ausgebildet sein sollte.

Bei der dritten erfindungsgemäßen Alternative der Erfindung ist das erste optische Element aus einem zumindest teilweise für die Laserstrahlung optisch transparenten Material gebildet und weist eine doppelkeilförmige Gestalt auf. Zwischen kegel- oder kegelstumpfförmigen die Laserstrahlung brechenden Oberflächen kann es eine äußere rotationssymmetrische Mantelfläche aufweisen, an der oder an einer dort ausgebildeten reflektierenden Beschichtung der mindestens eine Laserstrahl reflektiert wird. Es besteht aber auch die Möglichkeit, dass dieses erste optische Element von einem hohlzylinderförmigen Körper umschlossen ist und die Reflexion des mindestens einen Laserstrahls von einer reflektierenden Oberfläche des Körpers oder einer reflektierenden Beschichtung, die an der inneren Mantelfläche des hohlzylinderförmigen Körpers ausgebildet ist, erreicht werden kann.

Die doppelkeilförmige Gestalt kann mit kegel- oder kegelstumpfförmigen Flächen erreicht werden, die nach innen oder auch nach außen in Bezug zur optischen Achse A des auf die erste optische Anordnung einfallenden mindestens einen Laserstrahls konisch ausgerichtet sind. Sind diese kegel- oder kegelstumpfförmigen Flächen nach außen weisend ausgerichtet, weist eine Spitze eines fiktiven Kegels einmal in Richtung des einfallendem Laserstrahls und die entgegengesetzt dazu ausgerichtete Spitze in Richtung auf eine entsprechende Oberfläche eines Werkstücks bzw. einer zweiten optischen Anordnung, auf die später noch eingegangen wird. Die Spitzen eines fiktiven Kegels können auch aufeinander zu gerichtet sein, wenn diese Flächen nach innen weisen. Die Spitzen können auch in entgegengesetzte Richtungen weisend ausgerichtet sein. Die Spitzen sollten möglichst in einer gemeinsamen bevorzugt parallel zur optischen Achse des einfallenden Laserstrahls angeordnet sein.

Es besteht auch die Möglichkeit, den Abstand des ersten optischen Elements zu der ersten optischen Anordnung zu verändern. Dadurch können die Winkelverhältnisse des einfallenden mindestens einen Laserstrahls und die Reflexions- bzw. Brechungswinkel verändert werden, was zu veränderten Radien des rotierenden mindestens einen Laserstrahls, der auf eine Oberfläche eines Werkstücks gerichtet wird, führen kann.

Eine reflektierende und rotationssymmetrische Oberfläche oder Beschichtung sollte rotationssymmetrisch in Bezug zu einer Achse, die parallel zur optischen Achse A mit der der mindestens eine Laserstrahl auf die erste optische Anordnung auftrifft oder direkt in Bezug zu dieser optischen Achse A ausgerichtet sein.

Zusätzlich kann/können im Strahlengang des mindestens einen Laserstrahls, bevor der mindestens eine Laserstrahl direkt auf die reflektierende Oberfläche des Körpers oder der darauf vorhandenen reflektierenden Beschichtung oder auf ein erstes optisches Element auftrifft, ein den mindestens einen Laserstrahl formendes optisches Element, das zur Ausbildung eines definierten Strahlprofils aus dem einfallenden Laserstrahl ausgebildet ist, und/oder ein Polarisator angeordnet sein. Bei der Beeinflussung des Strahlprofils kann eine Veränderung des Strahlquerschnitts, insbesondere was seine geometrische Gestalt betrifft, erreicht werden.

Von einem ersten kegel- oder kegelstumpfförmigen optischen Element reflektierte und/oder gebrochene Laserstrahlung kann auf eine reflektierende und rotationssymmetrische Oberfläche, die an einem zylindrischen oder hohlzylindrischen Körper vorhanden ist, auftreffen. Dabei kann eine innere oder äußere Mantelfläche oder eine auf der inneren Mantelfläche oder äußeren Mantelfläche aufgebrachte Beschichtung für die Laserstrahlung reflektierend sein.

Der mindestens eine an der reflektierenden und/oder Laserstrahlung brechenden Oberfläche des zweiten optischen Elements oder der aus einem ersten optischen Element nach einer optischen Brechung austretende mindestens eine Laserstrahl kann auf eine zweite den mindestens einen Laserstrahl in Richtung der zu bearbeitenden Oberfläche des Werkstücks zweidimensional auslenkende zweite optische Anordnung auftreffen und von dort in Richtung auf eine Oberfläche eines Werkstücks gerichtet werden.

Der Körper mit reflektierender Oberfläche oder Beschichtung kann in Form eines Zylinders oder Hohlzylinders mit konstantem, abgestuften oder zumindest bereichsweise konischem Innen- und/oder Außendurchmesser oder ein innen und/oder außen rotationssymmetrischer Körper mit zumindest bereichsweise konischer äußerer und/oder innerer Mantelfläche oder das erste optische Element kann an seiner rotationssymmetrischen und ggf. reflektierenden Mantelfläche einen konstanten, abgestuften oder zumindest bereichsweise konischen Außendurchmesser aufweisen.

Zwei sich gegenüberliegend angeordnete Oberflächen eines Körpers an denen eine Reflexion und/oder Brechung des einfallenden und ausfallenden mindestens einen Laserstrahls erfolgt können kegel- oder kegelstumpfförmig ausgebildet sein.

Ein hohlzylindrischer Körper kann mit mindestens einem teilkreisförmigen Segment gebildet sein. Dabei kann über den Umfang mindestens ein Spalt vorhanden sein. In diesem Bereich kann dann keine Reflexion erfolgen. Es können auch mehrere teilkreisförmige Segmente genutzt werden, die bevorzugt äquidistant zueinander angeordnet sind und zwischen denen jeweils ein nichtreflektierender Spalt vorhanden ist, die einen hohlzylinderförmigen Körper bilden.

Ein Besonderer Vorteil der Erfindung ist es, dass die Geschwindigkeit rotativer

Strahldrehungen sowohl des Strahlprofils als auch entlang der Vorschubbewegungsbahn des jeweiligen Brennflecks so erhöht werden kann, dass eine Synchronisation dieser Bewegung mit einer Scannerbewegung möglich ist, ohne dass auf Brennfleckvorschubbewegungsgeschwindigkeiten von einigen Metern/Sekunde verzichtet werden muss. Die Erfindung leistet damit einen Beitrag, hohe Laserleistungen z.B. von Ultrakurzpulslasern (aber auch von cw-Lasern) durch die zeitliche und räumliche Verteilung des Energieeintrags über eine große Fläche in ein zu bearbeitendes Werkstück zu erreichen, ohne durch zu hohen thermischen Energieeintrag die Abtragspräzision zu verringern.

Darüber hinaus bieten sich neue Ansätze für Applikationen an, bei denen wesentlich höhere Drehgeschwindigkeiten und auch Winkelbeschleunigungen realisiert werden können als das heute möglich ist. Somit werden neue Möglichkeiten für das Laserbohren geschaffen. Durch die hohen Drehgeschwindigkeiten/Drehzahlen können Hochleistungs-Ultrakurzpulslaser mit hohen Repetitionsraten fürs Laserbohren eingesetzt werden, ohne dass Qualitätseinbußen bei Nutzung der vollen Laserleistung zu erwarten sind.

Letztendlich kann mit der Erfindung die Prozesszeit bei der Lasermaterialbearbeitung mit höheren Laserleistungen bei gleichbleibender Qualität verkürzt werden.

Die Erfindung kann überall dort angewendet werden, wo eine schnelle Drehung von (insbesondere nichtrotationssymmetrisch) geformten Laserstrahlen oder linear polarisierte Laserstrahlen um ihre eigene Achse (Strahlprofilausrichtung) bzw. auf Kreisbahnen vorteilhaft sind. Das ist beispielsweise bei der Lasermikrobearbeitung mit Ultrakurzpulslasern hoher Leistung der Fall. Ebenso kann der Einsatz aber auch bei der Lasermakromaterialbearbeitung mit cw-Lasern erfolgen -z.B. beim Remote-Schneiden. Oftmals überlagert man dort der Scannerbewegung eine zusätzliche Strahl-Wobbelbewegung um eine definierte Leistungsverteilung über die Brennfleckvorschubbewegung zu erzeugen. Diese Funktion kann durch ein strahlformendes Element, das beliebige Leistungsverteilungen ermöglicht, realisiert und mit der erfindungsgemäßen ersten Alternative entlang der Brennfleckvorschubbewegung ausgerichtet werden.

Eine weitere vorteilhafte Anwendung der erfindungsgemäßen Vorrichtung zur Strahlausrichtung ist die Korrektur von optischen Verzeichnungen geformter Laserstrahlquerschnittsflächen bei Auslenkung im Scanfeld von Scannersystemen. Bei der Anwendung von nichtrotationssymmetrisch geformten Laserstrahlquerschnittsflächen kommt es bei der Auslenkung eines so geformten Laserstrahls in einem Markierfeld einer Scanneroptik zu Fehlern, die sich unter anderem in Form einer ungewollten Verdrehung der Strahlprofilorientierung in Abhängigkeit von der Position im Markierfeld zeigen. Diese Verdrehungen lassen sich mithilfe der Erfindung dynamisch während des Scannens korrigieren. Dadurch können größere Bereiche des Markierfeldes ohne bzw. mit geringen optischen Fehlern ausnutzen.

Nachfolgend soll die Erfindung beispielhaft näher erläutert werden.

Dabei zeigen:
- Figur 1: ein erstes Ausführungsbeispiel in schematischer Darstellung;
- Figur 2: ein zweites Ausführungsbeispiel in schematischer Darstellung und
- Figur 3: ein drittes Ausführungsbeispiel in schematischer Darstellung.

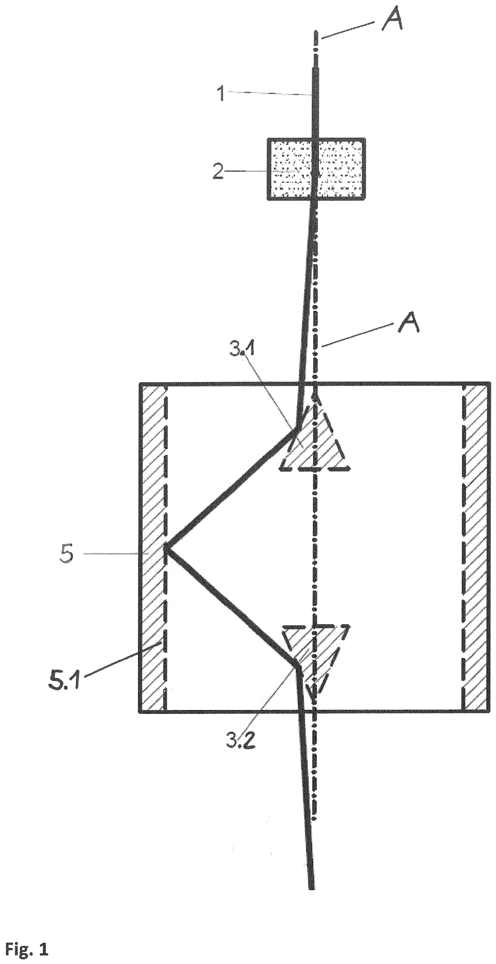

Bei dem in Figur 1 gezeigten Ausführungsbeispiel trifft ein Laserstrahl 1 auf eine erste optische Anordnung 2, die so ausgebildet ist, dass der Laserstrahl 1 zweidimensional ausgelenkt werden kann. Die Auslenkung erfolgt dabei so, dass die Vorschubbewegung des Brennflecks des Laserstrahls 1 einer Kreisbahn folgt oder diese Bewegung spiralförmig um die optische Achse A des einfallenden Laserstrahls 1 erfolgt. Die erste optische Anordnung 2 kann dabei ein Scanner, insbesondere ein Galvoscanner sein.

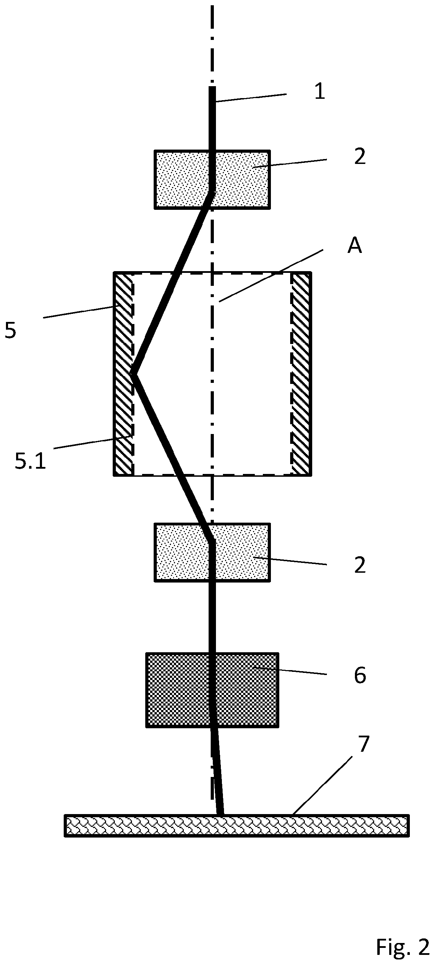

Der so ausgelenkte Laserstrahls 1 kann, wie in Figur 2 gezeigt, mit der ersten optischen Anordnung 2 direkt auf die reflektierende Oberfläche 5.1 oder Beschichtung des hohlzylinderförmigen Körpers 5 und von dort auf eine zweite optische Anordnung 2 und von dieser in Richtung einer ebenfalls nicht gezeigten Bearbeitungsoptik 6 (z.B. Galvanometerscanner) gerichtet werden oder direkt von der reflektierenden Oberfläche 5.1 auf eine zu bearbeitende Oberfläche eines Werkstücks 7 gerichtet werden, was der ersten erfindungsgemäßen Alternative entspricht.

Der so ausgelenkte Laserstrahl 1 kann aber auch, wie in Figur 1 gezeigt mit wechselnden Auftreffpositionen auf eine äußere Mantelfläche eines ersten kegelförmigen Elements 3.1 auftreffen und wird von dort in Richtung einer den Laserstrahl 1 reflektierenden Beschichtung 5.1 ausgelenkt. Die reflektierende Beschichtung 5.1 ist bei diesem Beispiel auf der inneren Mantelfläche des hohlzylindrischen Körpers 5 ausgebildet und daher rotationssymmetrisch in Bezug zur optischen Achse A ausgebildet.

Der von der Beschichtung 5.1 reflektierte Laserstrahl 1 trifft auf eine reflektierende Mantelfläche eines zweiten kegelförmigen optischen Elements 3.2 auf und wird von dieser in Richtung auf eine Oberfläche eines nicht dargestellten Werkstücks oder einer ebenfalls nicht dargestellten zweiten optischen Anordnung, mit der ebenfalls eine zweidimensionale Auslenkung erreicht werden kann, reflektiert. Dies entspricht der zweiten erfindungsgemäßen Alternative.

Die Spitzen der kegelförmigen optischen Elemente 3.1 und 3.2 weisen dabei in entgegengesetzte Richtungen. Erstes und zweites optisches Element 3.1 und 3.2 sind dabei miteinander fluchtend entlang der optischen Achse A des einfallenden Laserstrahls 1 ausgerichtet. Sie können auch in einem Abstand zu dieser Achse A aber in einer parallel dazu ausgerichteten Achse angeordnet sein.

Der Laserstrahl 1 kann so mit einer rotierenden oder spiralförmigen Bewegung seines Brennflecks beeinflusst werden. Der jeweilige Radius kann mit einer Variation der Auftreffposition des Laserstrahls auf die reflektierende Oberfläche des ersten optischen Elements 3.1 beeinflusst werden. Dazu kann der Abstand der Auftreffposition in Bezug zur ersten optischen Anordnung verändert werden.

Eine solche Beeinflussung ist ebenfalls, wie im allgemeinen Teil der Beschreibung bereits erläutert, durch eine Veränderung des Abstandes zwischen erstem und zweiten optischen Element 3.1 und erster optischer Anordnung 2 sowie eine Durchmessveränderung am Körper 5 mit der reflektierenden Beschichtung 5.1, die stufenweise oder kontinuierlich mit einer konischen Ausbildung realisierbar ist, erreichbar.

In ebenfalls nicht dargestellter Form kann der einfallende und ausgelenkte Laserstrahl 1 an der äußeren Mantelfläche des ersten kegelförmigen optischen Elements 3.1 nicht nur reflektiert, sondern ein Teil der Laserstrahlung auch an dieser Oberfläche und einer weiteren Oberfläche des ersten optischen Elements 3.1 gebrochen werden. Bei Einhaltung eines geeigneten Neigungswinkels der äußeren Mantelfläche des ersten kegelförmigen optischen Elements 3.1 kann sowohl der reflektierte, wie auch der gebrochene Teil des Laserstrahls 1 in Form von zwei Teilstrahlen auf die reflektierende Beschichtung 5.1 gerichtet werden. Die beiden dort reflektierten Teilstrahlen können dann auf die äußere reflektierende kegelförmige Mantelfläche des zweiten optischen Elements 3.2 reflektiert und von dort, wie vorab beschrieben weiter reflektiert werden, so dass eine Bearbeitung mit den zwei in unterschiedlichen Radien rotierenden Teilstrahlen möglich ist.

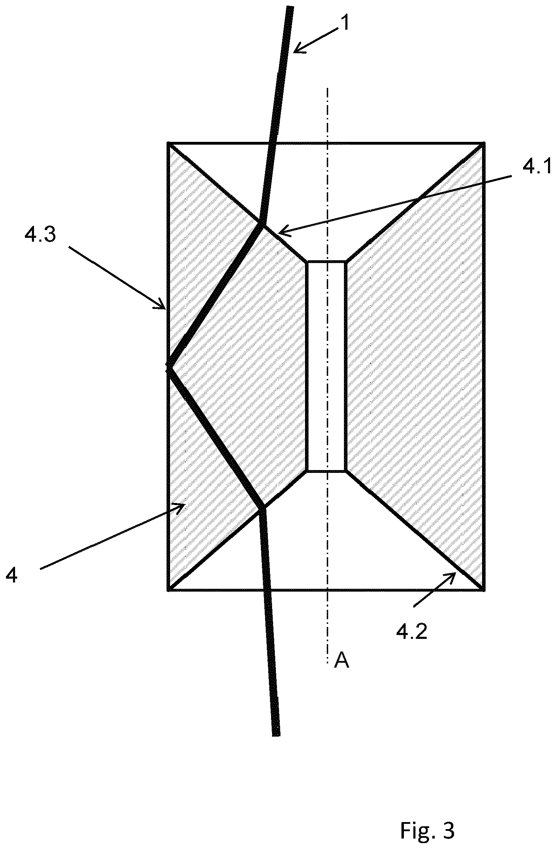

Bei dem in Figur 3 gezeigten Ausführungsbeispiel, die der dritten erfindungsgemäßen Alternative entspricht, trifft der mit der hier nicht gezeigten ersten optischen Anordnung 2 zweidimensional ausgelenkte Laserstrahl 1 wegen der zweidimensionalen Auslenkung ebenfalls unterschiedlichen Auftreffpositionen auf eine erste kegelförmige Oberfläche 4.1 eines ersten optischen Elements 4 auf und wird an dieser kegelförmigen Oberfläche so gebrochen, dass er auf eine rotationssymmetrische den Laserstrahl 1 reflektierende rotationssymmetrische Oberfläche 4.3 oder eine reflektierende Beschichtung eines zylindrischen Körpers 5 auftrifft. Von dort wird der Laserstrahl 1 im Inneren des ersten optischen Elements 4 zu einer zweiten kegelförmigen Oberfläche 4.2 des ersten optischen Elements 4 gerichtet und an dieser zweiten Oberfläche 4.2 erneut gerochen, so dass seine Richtung ebenfalls erneut in eine andere Richtung gelenkt wird.

Der zylindrische doppelkeilförmige Körper 5 ist dabei aus einem für die jeweilige Laserstrahlung zumindest überwiegend optisch transparenten Material, beispielsweise einem optischen Glas gebildet.

Bei dem gezeigten Beispiel weisen die kegelförmigen Oberflächen des ersten optischen Elements 4 nach außen. Sie können aber auch entgegengesetzt geneigt sein, so dass sich eine entgegengesetzte Ausrichtung der Kegel ergibt. Zumindest der Neigungswinkel der ersten kegelförmigen Oberfläche 4.1 auf die der Laserstrahl 1 zuerst auftrifft, sollte dabei so gewählt werden, dass der an dieser Oberfläche gebrochene Laserstrahl 1 an der rotationssymmetrischen Mantelfläche 4.3 des ersten optischen Elements 4 in Richtung auf die zweite kegelförmige Oberfläche 4.2 reflektiert werden kann.

In nichtdargestellter Form kann/können bei den drei Ausführungsbeispielen ein zur Ausbildung eines definierten Strahlprofils geeignetes optisches Element und/oder ein Polarisator im Strahlengang des Laserstrahls 1 angeordnet sein.

## Patentansprüche

1. Anordnung zur Rotation, Ausrichtung und/oder Formung mindestens eines Laserstrahls, bei der der mindestens eine Laserstrahl (1) von einer Laserstrahlungsquelle mittels einer ersten optischen Anordnung (2) zweidimensional einer Kreisbahnbewegung folgend oder spiralförmig ausgelenkt
und direkt auf eine innere rotationssymmetrische Oberfläche eines hohlzylinderförmigen Körpers (5) gerichtet wird, wobei die rotationsymmetrische Oberfläche für die Laserstrahlung reflektierend oder der hohlzylinderförmige Körper (5) mit einer reflektierenden Beschichtung an seiner äußeren oder inneren Mantelfläche beschichtet ist
oder
der mindestens eine Laserstrahl (1) auf mindestens eine den mindestens einen Laserstrahl (1) reflektierende und/oder in einem Winkel ungleich 0° und ungleich 90° brechende rotationssymmetrische Oberfläche (4.1) mindestens eines ersten optischen Elements (3.1, 4) gerichtet ist, wobei die reflektierende und/oder brechende Oberfläche so ausgerichtet ist, dass der von dieser Oberfläche reflektierte und/oder gebrochene mindestens eine Laserstrahl (1) auf eine für die Laserstrahlung reflektierende und rotationssymmetrische Oberfläche (5.1, 4.3) oder die reflektierende Oberfläche (5.1) oder Beschichtung des hohlzylinderförmigen Körpers (5) auftrifft und
von der reflektierenden und rotationssymmetrischen Oberfläche (5.1, 4.3) oder Beschichtung auf eine weitere die Laserstrahlung reflektierende rotationssymmetrische Oberfläche eines zweiten optischen Elements (3.2)
oder
der mindestens eine Laserstrahl (1) auf eine zweite den mindestens einen Laserstrahl (1) in einem Winkel größer 0° und kleiner 90° brechende rotationssymmetrische Oberfläche (4.2) des ersten optischen Elements (4) zur Rotation, Ausrichtung und/oder Formung des mindestens eines Laserstrahls in Richtung einer zu bearbeitenden Oberfläche eines Werkstücks gerichtet ist; wobei
die den mindestens einen Laserstrahl (1) reflektierenden oder brechenden Oberflächen eines ersten und zweiten optischen Elements (3.1, 3.2) oder des ersten optischen Elements (4) in einem schräg geneigten Winkel in Bezug auf die optische Achse A des auf die erste optische Anordnung (2) einfallenden mindestens einen Laserstrahls (1) ausgerichtet sind, und wobei
das erste optische Element (4) aus einem zumindest teilweise für die Laserstrahlung optisch transparenten Material besteht und eine doppelkeilförmige Gestalt aufweist und zwischen kegel- oder kegelstumpfförmigen die Laserstrahlung brechenden Oberflächen (4.1, 4.2) eine rotationssymmetrische Mantelfläche aufweist, an der oder an einer dort ausgebildeten reflektierenden Beschichtung (5.1) der mindestens eine Laserstrahl (1) reflektiert wird.

2. Vorrichtung nach Anspruch 1, **dadurch gekennzeichnet, dass** ein erstes und ein zweites optisches Element (3.1, 3.2) jeweils ein kegel- oder kegelstumpfförmiger Spiegel oder Körper sind, die in einem Abstand zueinander angeordnet sind.

3. Vorrichtung nach einem der vorhergehenden Ansprüche, **dadurch gekennzeichnet, dass** ein erstes und/oder ein zweites optisches Element (3.1, 3.2) eine zumindest bereichsweise konkav oder konvex gekrümmte äußere Mantelfläche aufweist/aufweisen.

4. Anordnung nach einem der vorhergehenden Ansprüche, **dadurch gekennzeichnet, dass** der Abstand des ersten-optischen Elements (3.1) zu der ersten optischen Anordnung (2) veränderbar ist.

5. Anordnung nach einem der vorhergehenden Ansprüche, **dadurch gekennzeichnet, dass** die reflektierende und rotationssymmetrische Oberfläche (5.1, 4.3) rotationssymmetrisch in Bezug zu einer Achse, die parallel zur optischen Achse A mit der der mindestens eine Laserstrahl (1) auf die erste optische Anordnung (2) auftrifft oder direkt in Bezug zu dieser optischen Achse A ausgerichtet ist.

6. Anordnung nach einem der vorhergehenden Ansprüche, **dadurch gekennzeichnet, dass** im Strahlengang des mindestens einen Laserstrahls (1), bevor der mindestens eine Laserstrahl (1) auf die reflektierende Oberfläche (5.1) oder Beschichtung des hohlzylinderförmigen Körpers (5) oder auf ein erstes optisches Element (3.1, 4) auftrifft, ein den mindestens einen Laserstrahl (1) formendes optisches Element, das zur Ausbildung eines definierten Strahlprofils aus dem einfallenden Laserstrahls (1) ausgebildet ist, und/oder ein Polarisator angeordnet ist/sind.

7. Anordnung nach einem der vorhergehenden Ansprüche, **dadurch gekennzeichnet, dass** von einem ersten kegel- oder kegelstumpfförmigen optischen Element (3.1) reflektierte und/oder gebrochene Laserstrahlung auf eine reflektierende und rotationssymmetrische Oberfläche (5.1), die an einem zylindrischen oder hohlzylindrischen Körper (5) vorhanden ist, auftrifft.

8. Anordnung nach einem der vorhergehenden Ansprüche, **dadurch gekennzeichnet, dass** der mindestens eine Laserstrahl (1) nach einer Reflexion an der reflektierenden Oberfläche (5.1) oder Beschichtung des hohlzylinderförmigen Körpers (5) oder
an der reflektierenden und/oder Laserstrahlung brechenden Oberfläche des zweiten optischen Elements (3.2) oder
der aus einem ersten optischen Element (4) nach einer optischen Brechung austretende mindestens einen Laserstrahl (1) auf eine zweite den mindestens einen Laserstrahl (1) in Richtung der zu bearbeitenden Oberfläche des Werkstücks zweidimensional auslenkende optische Anordnung auftrifft.

9. Anordnung nach einem der vorhergehenden Ansprüche, **dadurch gekennzeichnet, dass** der Körper (5) mit konstantem, abgestuften oder zumindest bereichsweise konischem Innen- und/oder Außendurchmesser oder ein innen und/oder außen rotationssymmetrischer Körper mit zumindest bereichsweise konischer äußerer und/oder innerer Mantelfläche ist oder
das erste optische Element (4) an seiner rotationssymmetrischen Mantelfläche einen konstanten, abgestuften oder zumindest bereichsweise konischen Außendurchmesser aufweist.

10. Anordnung nach einem der vorhergehenden Ansprüche, **dadurch gekennzeichnet, dass** ein hohlzylindrischer Körper (5) mit mindestens einem teilkreisförmigen Segment gebildet ist.
